# EUROPEAN PATENT APPLICATION

(11) **EP 2 671 729 A1**
(43) Date of publication of application: **11.12.2013**
(21) Application number: 12742121.2
(22) Date of filing: 27.01.2012
(51) Int. Cl.: B60C 9/08, B29C 33/02, B29C 35/02, B29D 30/06, B60C 9/06, B60C 11/01

(54) **PNEUMATIC TIRE AND METHOD FOR MANUFACTURING SAME**

(30) Priority: 31.01.2011 JP 2011018383
(71) Applicant: The Yokohama Rubber Co., Ltd., Minato-ku Tokyo 105-8685 (JP)
(72) Inventor: KOBAYASHI, Yuichi, Hiratsuka-shi Kanagawa 254-8601 (JP)
(74) Representative: Isarpatent
(86) International application number: PCT/JP2012/051740
(87) International publication number: WO 2012/105426

(57) **Abstract**

A pneumatic tire includes: at least one carcass layer 4A, 4B bridging between a pair of beads 3 and 3; and a belt layer 7A, 7B with a plurality of layers, the belt layer being disposed at an outer peripheral side of the carcass layer 4A, 4B in a tread 1. In a case where a shoulder-equivalent region X is defined as a region between a position P2 at a peripheral length of 20 mm along a tire's meridional cross-section heading from a belt-edge corresponding position P1 on a tire inner surface S corresponding to an edge of a broadest belt layer 7A toward a bead-toe side and the belt-edge corresponding position P1, a rubber portion interposed between a carcass cord C included in the carcass layer at an innermost side and the tire inner surface S has a thickness t of equal to or less than 1 mm at least in the shoulder-equivalent region X, and the rubber portion is formed by a rubber composition mainly including a diene rubber. Accordingly, a pneumatic tire and a method for manufacturing the tire, which makes it possible to prevent rupturing of a carcass cord, even with the side rigidity having been increased, thus improving the durability, can be provided.

## Description

### TECHNICAL FIELD

The present invention relates to a pneumatic tire suitably used as a racing tire and a method for manufacturing the tire. More specifically, the present invention relates to a pneumatic tire and a method for manufacturing the tire that makes it possible to prevent rupturing of a carcass cord, even with the side rigidity having been increased, thus improving the durability.

### BACKGROUND ART

A pneumatic tire is constructed with a carcass layer bridging between a pair of beads. In a tread, a plurality of belt layers is disposed at an outer peripheral side of the carcass layer. Especially in the case of a racing tire, an enhanced side rigidity to improve the steering stability has been desired.

Techniques for enhancing the side rigidity of a pneumatic tire include: increase of the height of winding of a carcass layer; a carcass layer with a bias structure; or adding a reinforcing layer to beads or sidewalls (for example, see Patent Document 1).

However, if the side rigidity of a pneumatic tire is increased, stresses concentrate in the regions located at the borders between the tread and the sidewalls.
A consequent problem is that rupturing of carcass cords is likely to occur at the regions. Therefore, from the perspective of avoiding rupturing of the carcass cords to ensure durability, the increase in the side rigidity is inhibited under current circumstances.

### CITATION LIST

### PATENT LITERATURE

Patent Document 1: JP-A-2008-24063

### SUMMARY OF INVENTION

### PROBLEMS TO BE SOLVED BY THE INVENTION

An object of the present invention is to provide a pneumatic tire and a method for manufacturing the tire that makes it possible to improve the durability by preventing rupture of carcass cords even when the side rigidity is increased.

### SOLUTIONS TO THE PROBLEMS

To achieve the object, a pneumatic tire according to the present invention includes at least one carcass layer bridging between a pair of beads and a belt layer with a plurality of layers. The belt layer is disposed at an outer peripheral side of the carcass layer in a tread. In the pneumatic tire, in a case where a shoulder-equivalent region is defined as a region between a position at a peripheral length of 20 mm along a tire's meridional cross-section heading from a belt-edge corresponding position on a tire inner surface corresponding to an edge of a broadest belt layer toward a bead-toe side and the belt-edge corresponding position, a rubber portion interposed between the carcass cord included in the carcass layer at an innermost side and the tire inner surface has a thickness of equal to or less than 1 mm at least in the shoulder-equivalent region, and the rubber portion is formed by a rubber composition mainly including a diene rubber.

A method for manufacturing the pneumatic tire according to the present invention to achieve the object is a method for manufacturing the above-described pneumatic tire. The method features making a vulcanization temperature at the tire inner surface side be lower than a vulcanization temperature at the tire outer surface side in vulcanizing an unvulcanized tire inside the mold, subsequent to molding of the unvulcanized tire.

### EFFECTS OF INVENTION

In the present invention, the thickness of the rubber portion interposed between the carcass cord contained in the carcass layer at the innermost side and the tire inner surface is equal to or less than 1 mm at least in the shoulder-equivalent region. The rubber portion is formed by a rubber composition mainly including a diene rubber which generates less heat compared with butyl rubber. This allows inhibiting heat generation at the carcass layer as much as possible in a region where stress is likely to concentrate when side rigidity is increased. Further, rupturing of the carcass cords in the region can be avoided. Accordingly, even if the side rigidity of the pneumatic tire is increased, the durability can be improved while rupturing of the carcass cord is prevented.

In the present invention, it is preferred that an inner liner layer be disposed on at least a region at the bead-toe side of the tire inner surface. In the above-described shoulder-equivalent region, it is necessary to specify a thickness of, and a material of, the rubber portion. The rubber volume around the beads may be suitably adjusted by disposing at least the region at the bead-toe side of the tire inner surface.

At least two carcass layers are bridged between the pair of beads. It is preferred that an angle of the cords in the carcass layers with respect to the tire's circumferential orientation be set in a range of from 60° to 86° and the carcass layers be disposed such that the carcass cords intersect one another between the layers. The use of this belted bias construction allows effectively increasing the side rigidity of the pneumatic tire.

The above-described pneumatic tire preferably serves as a racing tire. Improved steering stability by enhanced side rigidity has been demanded of racing tires. On the other hand, air-permeation prevention performance based on an inner liner layer is demanded for racing tires. Thus, racing tires are suitable as a target application for the construction described above.

In manufacturing the above-described pneumatic tire, when vulcanizing the unvulcanized tire inside the mold subsequent to molding of the unvulcanized tire, the vulcanization temperature at the tire inner surface side is made lower than the vulcanization temperature at the tire outer surface side. This avoids over-curing of the coating rubber of the carcass layer. That is, in the shoulder-equivalent region, if the thickness of the rubber portion at the tire inner surface side is thinner than the carcass cords, the coating rubber of the carcass layer is prone to over-curing. Over-cure in the region can be prevented by adjusting the vulcanization temperature at the tire inner surface side to be lower than the vulcanization temperature at the tire outer surface side. Tire failure that originates in cracking of the coating rubber of the carcass layer can thereby be prevented. In particular, the vulcanization temperature at the tire outer surface in the tread of the unvulcanized tire is preferably set to be in a range of from 130°C to 170°C. Further, the vulcanization temperature at the tire inner surface in the tread of the unvulcanized tire is preferably set to be in a range of from 55% to 95% of the vulcanization temperature at the tire outer surface.
The objects, features, aspects and advantages of the invention will become more apparent from the following detailed description and the accompanying drawings.

### BRIEF DESCRIPTION OF THE DRAWINGS

Fig. 1 is a meridional half sectional view illustrating a pneumatic tire according to an embodiment of the present invention.
Fig. 2 is a meridional half sectional view illustrating a pneumatic tire according to another embodiment of the present invention.
Fig. 3 is a meridional half sectional view illustrating a pneumatic tire according to a further embodiment of the present invention.
Fig. 4 is a meridional half sectional view illustrating a pneumatic tire according to yet another embodiment of the present invention.
Fig. 5 is a meridional half sectional view illustrating a pneumatic tire according to still another embodiment of the present invention.
Fig. 6 is a cross-sectional view illustrating a tire inner surface portion in a shoulder equivalent region of the pneumatic tires of Figs. 1 to 3.
Fig. 7 is a cross-sectional view illustrating a tire inner surface portion in the shoulder equivalent region of the pneumatic tires of Figs. 4 and 5.
Fig. 8 is a cross-sectional view of a tire vulcanizer used for a method for manufacturing the pneumatic tire according to the embodiments of the present invention.

### DESCRIPTION OF EMBODIMENTS

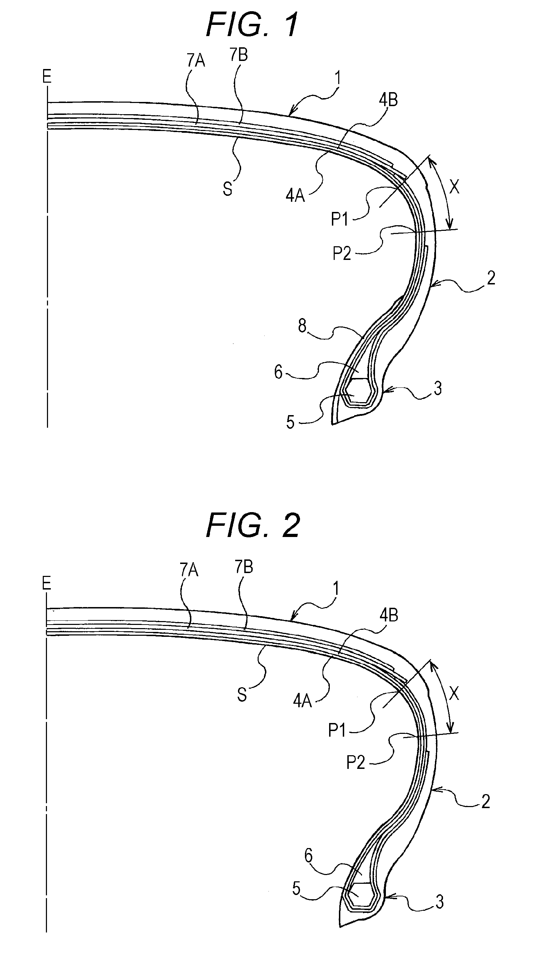

A configuration of an embodiment of the present invention will be described with reference to the accompanying drawings. Figs. 1 to 5 are views illustrating pneumatic tires according to respective embodiments of the present invention. All the pneumatic tires are racing tires.

In Figs. 1 to 5, reference numeral 1 denotes a tread, reference numeral 2 denotes a sidewall, and reference numeral 3 denotes a bead. Two carcass layers 4A and 4B are disposed between a pair of beads 3 and 3. The carcass layers 4A and 4B are formed from a plurality of carcass cords, which is stretch and aligned, and coated with rubber. These carcass layers 4A and 4B surround a bead core 5 disposed at each bead 3 and are folded back from the inside to the outside of the tire. The cord angle of the carcass layers 4A and 4B relative to the tire's circumferential orientation is set to be in a range of from 60° to 86°. The carcass layers 4A and 4B are disposed so that the carcass codes intersect with one another between the layers. The cord angle of the carcass layers 4A and 4B is an angle measured at a tire equatorial position E. This bias construction is effective in terms of ensuring the side rigidity. As the carcass cord, an organic fiber cord such as a polyester fiber cord is used. The bead core 5 includes a bead filler 6 on the outer periphery. This bead filler 6 is interposed between the main body portion and the folding back portion of the carcass layers 4A and 4B.

The carcass layers 4A and 4B of the tread 1 include two belt layers 7A and 7B on the outer peripheral side. The belt layers 7A and 7B are formed from a plurality of belt cords, which is stretch and aligned, and coated with rubber. The cord angle of the belt layers 7A and 7B relative to the tire's circumferential orientation is set to be in a range of from 15° to 40°. Further, the belt layers 7A and 7B are disposed so that the belt cords intersect with one another between the layers. The cord angle of the belt layers 7A and 7B is an angle measured at the tire equatorial position E. A steel cord is preferably used as the belt cord. A highly-elastic organic fiber cord such as an aramid fiber cord can be also used as the belt cord.

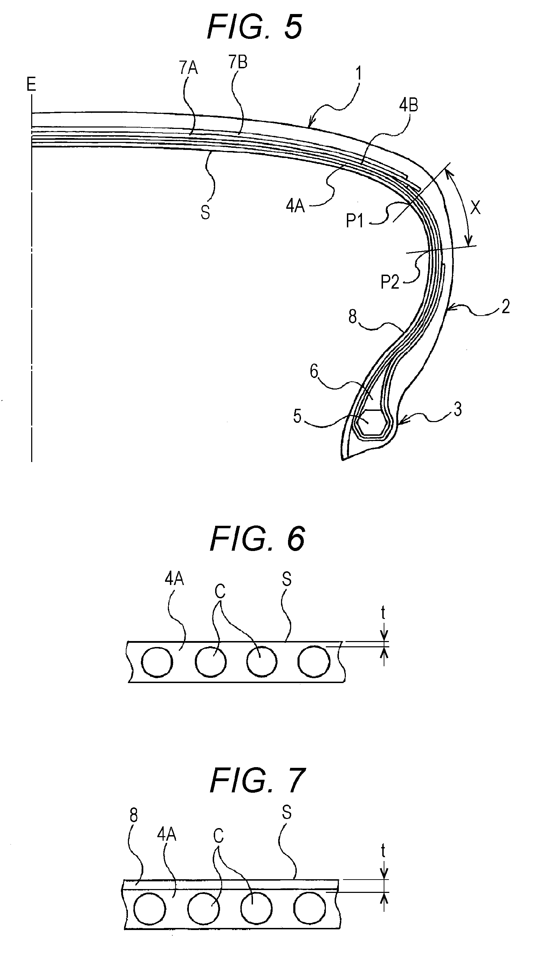

In the pneumatic tire, a belt-edge corresponding position of a tire inner surface S corresponding to the broadest edge of the belt layer 7A is referred to as P1. A position at a peripheral length of 20 mm from this P1 heading toward the bead-toe side in the tire's meridional cross-section is referred to as P2. The region between the belt-edge corresponding position P1 and P2 is defined as a shoulder-equivalent region X. In this situation, a thickness "t" of a rubber portion interposed between a carcass cord C (see Figs. 6 and 7) included in the carcass layer 4A on the innermost side and a tire inner surface S is set equal to or less than 1 mm at least in the shoulder-equivalent region X. The rubber portion is formed of a rubber composition mainly including a diene rubber. Here, the belt-edge corresponding position P1 of the tire inner surface S is a position where a perpendicular line from the broadest edge of the belt layer 7A to the tire inner surface S intersects with the tire inner surface S.

In Fig. 1, an inner liner layer 8 is selectively disposed on the region of the tire inner surface S at the bead toe side. Consequently, the carcass layer 4A on the innermost side is exposed to the tire inner surface S in the shoulder-equivalent region X. The inner liner layer 8 is disposed at least in the region of the tire inner surface S at the bead toe side. Accordingly, a rubber volume around the bead can be adjusted as necessary. This allows shaping around the bead 3 and providing good fitting with a rim. In this case, it is preferred that the inner liner layer 8 be extended, with the bead toe as a starting point, from the bead toe toward the tread side in a peripheral length of at least 10 mm (preferably, a position at 20 mm to 70 mm) in the tire's meridional cross-section. The inner liner layer 8 may have a thickness of 0.5 mm to 3.0 mm.

In Fig. 2, the inner liner layer 8 is not disposed at the tire inner surface S. That is, the carcass layer 4A at the innermost side is exposed to the tire inner surface S in the shoulder-equivalent region X.

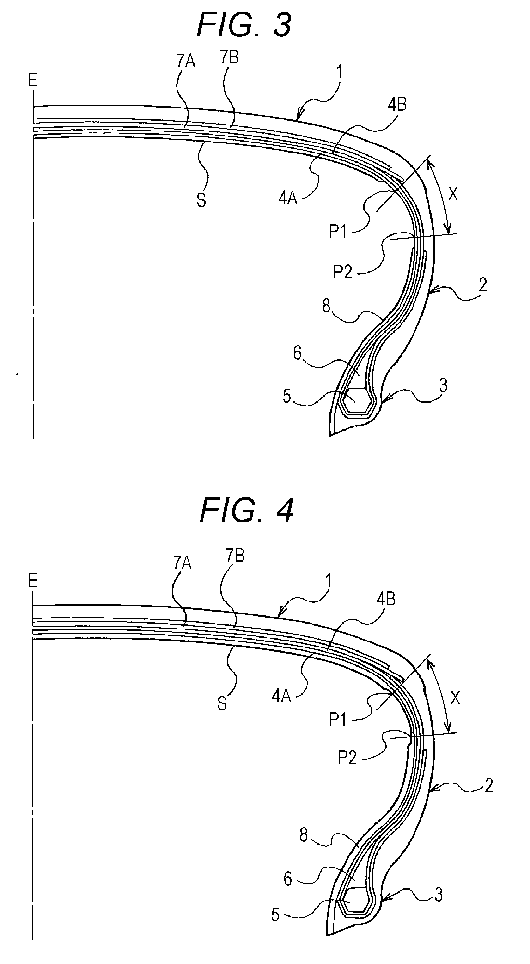

In Fig. 3, the inner liner layer 8 is selectively disposed at the region other than the shoulder-equivalent region X on the tire inner surface S. As a result, the carcass layer 4A at the innermost side is exposed to the tire inner surface S in the shoulder-equivalent region X.

In the shoulder-equivalent region X of the pneumatic tire in Fig. 1 to Fig. 3, the rubber portion is interposed between the carcass cord C of the carcass layer 4A at the innermost side and the tire inner surface S as illustrated in Fig. 6. This rubber portion has a thickness "t" (thickness of the cord rubber of the carcass layer 4A) is set equal to or less than 1 mm, preferably, in a range of 0.02 mm to 0.5 mm. The rubber portion interposed between the carcass cord C of the carcass layer 4A at the innermost side and the tire inner surface S is formed by a rubber composition mainly including a diene rubber, which is used for the coating rubber of the carcass layer 4A.

In Fig. 4, the tire inner surface S includes the inner liner layer 8 in the entire region. In Fig. 4, the inner liner layer 8 becomes locally thin in the shoulder-equivalent region X.

In Fig. 5, the tire inner surface S includes the inner liner layer 8 in the entire region. In Fig. 5, the inner liner layer 8 becomes thin in the entire region on the tire inner surface S including the shoulder-equivalent region X.

In the shoulder-equivalent region X of the pneumatic tire in Fig. 4 and Fig. 5, the rubber portion is interposed between the carcass cord C of the carcass layer 4A at the innermost side and the tire inner surface S as illustrated in Fig. 7. This rubber portion has a thickness "t" (sum of the thickness of the cord rubber of the carcass layer 4A and the thickness of the inner liner layer 8) is set equal to or less than 1 mm, preferably, in a range of 0.02 mm to 1 mm. The rubber portion interposed between the carcass cord C of the carcass layer 4A at the innermost side and the tire inner surface S is formed by a rubber composition mainly including a diene rubber, which is used for the coating rubber of the carcass layer 4A and the inner liner layer 8.

In the above-described pneumatic tire, the thickness "t" of the rubber portion interposed between the carcass cord C included in the carcass layer 4A at the innermost side and the tire inner surface S is set equal to or less than 1 mm at least in the shoulder-equivalent region X. The rubber portion is formed by a rubber composition mainly including a diene rubber, which generates less heat compared with butyl rubber. This allows inhibiting heat generation at the carcass layers 4A and 4B as much as possible in the region where stress is likely to concentrate when the side rigidity is increased. A rupture of the carcass cord C in the region can be avoided. Accordingly, the rupture of the carcass cord C can be prevented and durability can be improved even if the side rigidity is increased in the pneumatic tire where improvement in steering stability is required, such as a racing tire.

Here, assume that the thickness "t" of the rubber portion interposed between the carcass cord C included in the carcass layer 4A at the innermost side and the tire inner surface S is set larger than 1 mm in the shoulder-equivalent region X. In this case, even if the rubber portion is formed by a rubber composition mainly including a diene rubber, heat generation of the carcass layers 4A and 4B while the tire is running becomes large. This makes prevention of the rupture of the carcass cord C difficult.

A rubber composition, mainly including a diene rubber, means a rubber composition with a rubber constituent of equal to or more than 80 percent by weight being a diene rubber. This rubber composition can be combined with rubber other than a diene rubber. However, it is preferable that the entirety of the rubber constituents are a diene rubber(s). As the diene rubber, natural rubber (NR), isoprene rubber (IR), epoxidized natural rubber, styrene-butadiene rubber (SBR), butadiene rubber (BR), nitrile rubber (NBR), other hydrogenations, and similar material can be listed. Compounding agents such as fillers, softeners, age resisters, vulcanizing agents, and vulcanization accelerators may of course be added to the rubber composition as necessary.

The above-described pneumatic tire can be manufactured by a usual manufacturing method. In the above-described pneumatic tire, the thickness at the rubber portion at the tire inner surface side is thinner than the carcass cord C at least in the shoulder-equivalent region X. In view of this, the coating rubber of the carcass layers 4A and 4B tends to become over-cured. Accordingly, in the method for manufacturing the pneumatic tire, it is preferred that the vulcanization temperature along the tire inner surface be lower than the vulcanization temperature along the tire outer surface in vulcanizing the unvulcanized tire inside the mold subsequent to molding of the unvulcanized tire.

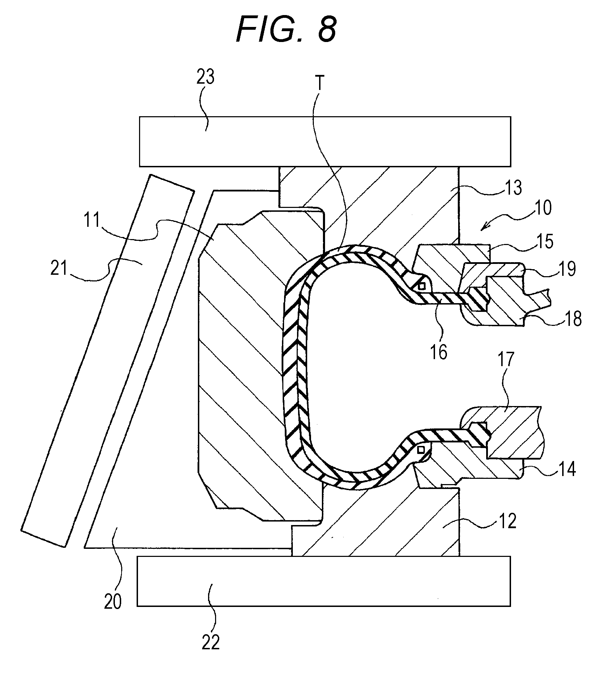

Fig. 8 is a view illustrating a tire vulcanizer used for the method for manufacturing the pneumatic tire according to the embodiment of the present invention. In Fig. 8, reference symbol T denotes an unvulcanized tire, reference numeral 10 denotes a mold where the unvulcanized tire T is vulcanized. This mold 10 includes a plurality of sectors 11, a lower mold 12, an upper mold 13, a lower bead ring mold 14, and an upper bead ring 15. The plurality of sectors 11 molds the tread of the unvulcanized tire T. The lower mold 12 and the upper mold 13 mold the sidewall of the unvulcanized tire T. The lower bead ring mold 14 and the upper bead ring 15 mold the bead of the unvulcanized tire T. On the other hand, a tubular bladder 16 presses the unvulcanized tire T from the inside. The lower end of the tubular bladder 16 is gripped between the lower bead ring mold 14 and a lower plump 17. The upper end of the bladder 16 is gripped between an upper plump 18 and an auxiliary ring 19. A block 20, which holds the sector 11, and a heater 21 are attached at the sector 11. A heater 22 is attached along downward of the lower mold 12. A heater 23 is attached along the upper side of the upper mold 13.

To manufacture the above-described pneumatic tire, after the unvulcanized tire T is molded, the unvulcanized tire T is put into the mold 10 and is mold-clamped. Then, the unvulcanized tire T is vulcanized by heating the mold 10 with the heaters 21 to 23. Usually, the inside of the bladder 16 is filled with a high-temperature steam, and the unvulcanized tire T is heated at the equivalent temperature from the inside and the outside. However, here, the inside of the bladder 15 is filled with nitrogen gas or similar at normal temperature instead of steam. This lowers the vulcanization temperature at the tire inner surface side than the vulcanization temperature at the tire outer surface side. This avoids the over-curing of the coating rubber of the carcass layer. Degrade in the physical property of the coating rubber can be avoid. As a result, a tire failure, like air is blown through from a crack in the coating rubber, can be prevented.

Especially, the vulcanization temperature at the tire outer surface in the tread of the unvulcanized tire T may be set to be in a range of from 130°C to 170°C. The vulcanization temperature at the tire inner surface in the tread of the unvulcanized tire T may be set to be in a range of from 55% to 95% of the vulcanization temperature at the tire outer surface. Selecting these vulcanization temperatures allows avoiding the over-curing of the coating rubber of the carcass layer while effectively progressing the vulcanization of the entire tire.

In the above-described embodiments, the pneumatic tire with the two carcass layers is described. However, the present invention is applicable to a pneumatic tire with at least one carcass layer.

### EXAMPLES

Tires according to a first conventional example, first and second comparative examples, and the first to fifth embodiments were manufactured. These tires variously differed in the structure and the material of the inner liner layer. These tire have a size of 330/710 R18. These tires included two carcass layers bridged between a pair of beads. These tires included two belt layers at the outer peripheral side of the carcass layer in the tread. The coating rubber of each carcass layer was constituted by a rubber composition mainly including a diene rubber. The thickness of the coating rubber at a part outside of the cord was set to 0.1 mm. In the vulcanization process, the unvulcanized tire in the mold was heated from the inside and the outside of the tire at temperature of approximately 150°C for approximately 22 minutes.

The tire of the first conventional example included the inner liner layer with a thickness of 1.4 mm, which is formed by the rubber composition main ingredient of which is a butyl rubber, at the entire region of the tire inner surface.

The tire of the first comparative example included the inner liner layer with a thickness of 0.9 mm, which is formed by the rubber composition main ingredient of which is a butyl rubber, at the entire region of the tire inner surface.

The tire of the second comparative example included the inner liner layer with a thickness of 1.4 mm, which is formed by the rubber composition mainly including a diene rubber, at the entire region of the tire inner surface.

The tire of the first embodiment selectively included the inner liner layer with a thickness of 1.4 mm, which is formed by the rubber composition mainly including a diene rubber, at the bead-toe side in the region of the tire inner surface as illustrated in Fig. 1.

In the tire of the second embodiment, as illustrated in Fig. 2, the inner liner layer was removed from the tire inner surface.

The tire of the third embodiment selectively included the inner liner layer with a thickness of 1.4 mm, which is formed by the rubber composition mainly including a diene rubber, in the region other than the shoulder-equivalent region of the tire inner surface as illustrated in Fig. 3.

The tire of the fourth embodiment included the inner liner layer constituted by the rubber composition, mainly including a diene rubber, at the entire region of the tire inner surface as illustrated in Fig. 4. This tire included the inner liner layer with a thickness of 0.9 mm at the shoulder-equivalent region and a thickness of 1.4 mm at the region other than the shoulder-equivalent region.

The tire of the fifth embodiment included the inner liner layer with a thickness of 0.9 mm, which is formed by the rubber composition mainly including a diene rubber, at the entire region of the tire inner surface as illustrated in Fig. 5.

The first conventional example, the first and second comparative examples, and the first to fifth embodiments had the thickness "t" of the rubber portion interposed between the carcass cord of the carcass layer at the innermost side in the shoulder-equivalent region and the tire inner surface as listed in Table 1.

These testing tires were evaluated on durability by the following evaluation method. The results are listed in Table 1.

### Durability:

Running test was carried out using an indoor drum-testing machine having a steel drum with a smoothed surface and a diameter of 1707 mm. This running test was performed under the following conditions. The testing tires were set to a wheel with a rim size of 18 × 13 J. Air pressure was set to 140 kPa. The speed was set to 250 km/h and a camber was set to 2°. Then, a plurality of steps defining load and running period were established as listed in Table 1. The running test was continued until the tire ruptured. In Table 1, a step in which the running was completed is indicated by "clear". In a case where the tire ruptured during the course of a step, elapsed time until rupture is indicated. Reaching a higher-load step means that the durability is superior.

**[Table 1]**

| | | First Conventional Example | First Comparative Example | Second Comparative Example | First Embodiment | Second Embodiment | Third Embodiment | Fourth Embodiment | Fifth Embodiment |
|---|---|---|---|---|---|---|---|---|---|
| Tire Construction | | (Fig. 5) | (Fig. 5) | (Fig. 5) | Fig. 1 | Fig. 2 | Fig. 3 | Fig. 4 | Fig. 5 |
| Material of Inner Liner Layer | | Butyl Rubber | Butyl Rubber | Diene Rubber | Diene Rubber | Diene Rubber | Diene Rubber | Diene Rubber | Diene Rubber |
| Thickness "t" of Rubber Portion (mm) | | 1.5 | 1.0 | 1.5 | 0.1 | 0.1 | 0.1 | 1.0 | 1.0 |
| Durability | Step 1: 5.0kN × 20min | clear | clear | clear | clear | clear | clear | clear | clear |
| | Step 2: 5.5kN × 20min | clear | clear | clear | clear | clear | clear | clear | clear |
| | Step 3: 6.0kN × 20min | 2min | clear | clear | clear | clear | clear | clear | clear |
| | Step 4: 6.5kN × 20min | | 15min | 18min | clear | clear | clear | clear | clear |
| | Step 5: 7.0kN × 20min | | | | clear | clear | clear | clear | clear |
| | Step 6: 7.5kN × 20min | | | | clear | clear | clear | 5min | 1min |
| | Step 7: 8.0kN × 20min | | | | clear | clear | clear | | |
| | Step 8: 8.5kN × 20min | | | | 2min | 4min | 1min | | |
| | Step 9: 9.0kN × 20min | | | | | | | | |

As apparent from Table 1, the tires of the first to fifth embodiments exhibited superior durability in severe running conditions compared with the first conventional example.

In contrast to this, although the tire of the first comparative example had the thickness "t" of 1.0 mm at the rubber portion in the shoulder-equivalent region, the inner liner layer was constituted by a rubber composition main ingredient of which is a butyl rubber. Accordingly, improvement effect of durability was insufficient.

Although the tire of the second comparative example included the inner liner layer, which is formed by the rubber composition mainly including a diene rubber, the thickness "t" at the rubber portion in the shoulder-equivalent region was 1.5 mm. Accordingly, improvement effect of durability was insufficient.

Next, in the sixth embodiment to tenth embodiment, tires were manufactured differentiating a vulcanization condition, but otherwise had the similar construction with the first to fifth embodiments. In the vulcanization process of these sixth to tenth embodiments, the unvulcanized tire was put in the mold, and the vulcanization temperature of the tire inner surface side was set lower than the vulcanization temperature of the tire outer surface side. More specifically, the vulcanization temperature at the tire outer surface in the tread of the unvulcanized tire was set to approximately 160°C. The vulcanization temperature at the tire inner surface in the tread of the unvulcanized tire was set to approximately 120°C. Thus, the unvulcanized tire was heated for approximately 22 minutes while adjusting the vulcanization condition

These testing tires were evaluated on durability by the above-described evaluation method. The results are listed in Table 2.

**[Table 2]**

| | | Sixth Embodiment | Seventh Embodiment | Eighth Embodiment | Ninth Embodiment | Tenth Embodiment |
|---|---|---|---|---|---|---|
| Tire Construction | | Fig. 1 | Fig. 2 | Fig. 3 | Fig. 4 | Fig. 5 |
| Material of Inner Liner Layer | | Diene Rubber | Diene Rubber | Diene Rubber | Diene Rubber | Diene Rubber |
| Thickness "t" of Rubber Portion (mm) | | 0.1 | 0.1 | 0.1 | 1.0 | 1.0 |
| Durability | Step 1: 5.0kN× 20min | clear | clear | clear | clear | clear |
| | Step 2: 5.5kN× 20min | clear | clear | clear | clear | clear |
| | Step 3: 6.0kN× 20min | clear | clear | clear | clear | clear |
| | Step 4: 6.5kN× 20min | clear | clear | clear | clear | clear |
| | Step 5: 7.0kN× 20min | clear | clear | clear | clear | clear |
| | Step 6: 7.5kN× 20min | clear | clear | clear | clear | clear |
| | Step 7: 8.0kN× 20min | clear | clear | clear | 10min | 6min |
| | Step 8: 8.5kN× 20min | clear | clear | clear | | |
| | Step 9: 9.0kN× 20min | clear | clear | clear | | |
| | Step 10: 9.5kN× 20min | clear | clear | clear | | |
| | Step 11: 10.0kN× 20min | 1min | 2min | 1min | | |

As seen from Table 2, the tire durability was further improved by lowering the vulcanization temperature at the tire inner surface side than the vulcanization temperature at the tire outer surface side in the vulcanization process. Especially, the improvement effect was outstanding in the case where the thickness "t" at the rubber portion in the shoulder-equivalent region was small.

This application is based on Japanese Patent Application No. 2011-018383 filed on January 31, 2011 in Japan by the applicant of this application, the disclosure of which is incorporated herein by reference in their entirety.

The description of the particular embodiments of the present invention has been presented for the purpose of illustration. The description is not intended to be exhaustive and limit the present invention to the described embodiment. It is apparent to those skilled in the art from the above description that various modifications and changes can be made.

### DESCRIPTION OF REFERENCE SIGNS

- 1: tread
- 2: sidewall
- 3: bead
- 4A, 4B: carcass layer
- 5: bead core
- 6: bead filler
- 7A, 7B: belt layer
- 8: inner liner layer
- 10: mold
- C: carcass cord
- S: tire inner surface
- X: shoulder-equivalent region

## Claims

1. A pneumatic tire, comprising:
at least one carcass layer bridging between a pair of beads; and
a belt layer with a plurality of layers, the belt layer being disposed at an outer peripheral side of the carcass layer in a tread, wherein
in a case where a shoulder-equivalent region is defined as a region between a position at a peripheral length of 20 mm along a tire's meridional cross-section heading from a belt-edge corresponding position on a tire inner surface corresponding to an edge of a broadest belt layer toward a bead-toe side and the belt-edge corresponding position, a rubber portion interposed between a carcass cord included in the carcass layer at an innermost side and the tire inner surface has a thickness of equal to or less than 1 mm at least in the shoulder-equivalent region, and
the rubber portion is formed by a rubber composition mainly including a diene rubber.

2. The pneumatic tire according to claim 1, wherein an inner liner layer is disposed on at least a region at the bead-toe side of the tire inner surface.

3. The pneumatic tire according to claim 1 or 2, wherein
at least two carcass layers are bridged between the pair of beads,
an angle of the cords in the carcass layers with respect to a tire's circumferential orientation is set in a range of from 60° to 86°; and
the carcass layers is disposed such that the carcass cords intersect one another between the layers.

4. The pneumatic tire according to any one of claims 1 to 3, wherein the pneumatic tire serves as a racing tire.

5. A method for manufacturing the pneumatic tire according to any one of claims 1 to 4, comprising:
molding an unvulcanized tire; and
vulcanizing the unvulcanized tire inside a mold after molding, wherein
a vulcanization temperature at a tire inner surface side is made lower than a vulcanization temperature at a tire outer surface side

6. The method for manufacturing the pneumatic tire according to claim 5, wherein
in vulcanizing, the vulcanization temperature at the tire outer surface in the tread of the unvulcanized tire is set to be in a range of from 130°C to 170°C, and
the vulcanization temperature at the tire inner surface in the tread of the unvulcanized tire is set to be in a range of from 55% to 95% of the vulcanization temperature at the tire outer surface.
